(19) **Europäisches Patentamt**
**European Patent Office**
**Office européen des brevets**

(11) **EP 4 694 386 A1**

(12) **EUROPEAN PATENT APPLICATION**
published in accordance with Art. 153(4) EPC

(43) Date of publication:
**11.02.2026 Bulletin 2026/07**

(21) Application number: **24781068.2**

(22) Date of filing: **12.03.2024**

(51) International Patent Classification (IPC):
$H04W\ 52/14^{(2009.01)}$    $H04W\ 52/36^{(2009.01)}$
$H04W\ 8/24^{(2009.01)}$    $H04W\ 76/16^{(2018.01)}$
$H04W\ 88/02^{(2009.01)}$

(52) Cooperative Patent Classification (CPC):
**H04W 8/24; H04W 52/14; H04W 52/36;**
**H04W 76/16; H04W 88/02**

(86) International application number:
**PCT/KR2024/003147**

(87) International publication number:
**WO 2024/205077 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.03.2023 US 202363455572 P**
           **26.09.2023 US 202363540388 P**

(71) Applicant: **LG Electronics Inc.**
**Yeongdeungpo-gu**
**Seoul 07336 (KR)**

(72) Inventors:
- **YANG, Yoonoh**
 **Seoul 06772 (KR)**
- **LEE, Sangwook**
 **Seoul 06772 (KR)**
- **HUH, Joongkwan**
 **Seoul 06772 (KR)**
- **HWANG, Jinyup**
 **Seoul 06772 (KR)**
- **PARK, Jinwoong**
 **Seoul 06772 (KR)**
- **NA, Yunsik**
 **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **MAXIMUM OUTPUT POWER**

(57) An embodiment of the present disclosure provides a method by which a UE performs communication. The method comprises the steps of: transmitting the capability of the UE to a base station; receiving power information from the base station, wherein the UE supports a concurrent operation for an NR uplink and a sidelink in an unlicensed band, and the capability includes a maximum UE power for the concurrent operation; and determining a configured maximum output power for the concurrent operation on the basis of the maximum UE power and a maximum allowed UE output power for the concurrent operation, wherein the power information includes the maximum allowed UE output power.

FIG. 9

**Description**

## TECHNICAL FIELD

The present specification relates to mobile communications.

## BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Standard for NR+SL-U terminals may be required.

## DISCLOSURE

## TECHNICAL SOLUTION

Standard for NR+SL-U terminals may be proposed.

## BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a diagram showing an example of a communication structure that can be provided in a 6G system.
FIG. 5 shows an example of an electromagnetic spectrum.
FIG. 6 is a wireless communication system.
FIG. 7 illustrates the structure of a radio frame used in NR.
FIG. 8 shows an example of subframe types in NR.
FIG. 9 shows the NR+SL-U operation of the UE configured transmitted power according to an embodiment of the present specification.
FIG. 10 shows the procedure of the UE for the disclosure of this specification.
FIG. 11 shows the procedure of the base station for the disclosure of this specification.

## MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

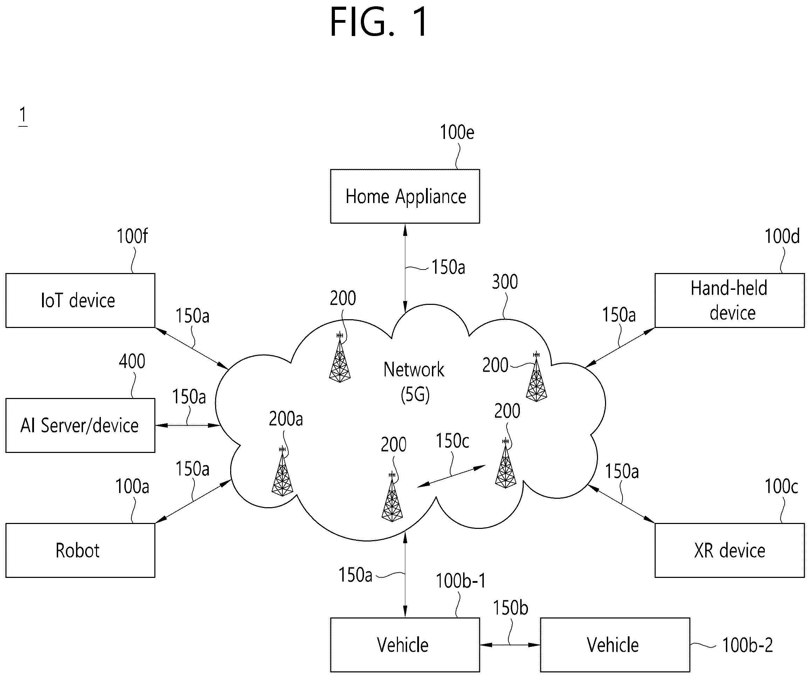

**FIG. 1 shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

[Table 1]

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of

## EP 4 694 386 A1

ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

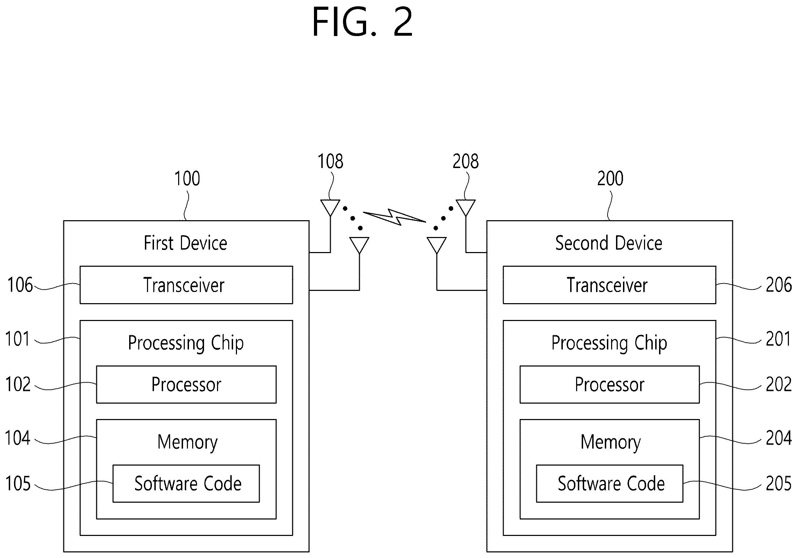

**FIG. 2 shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

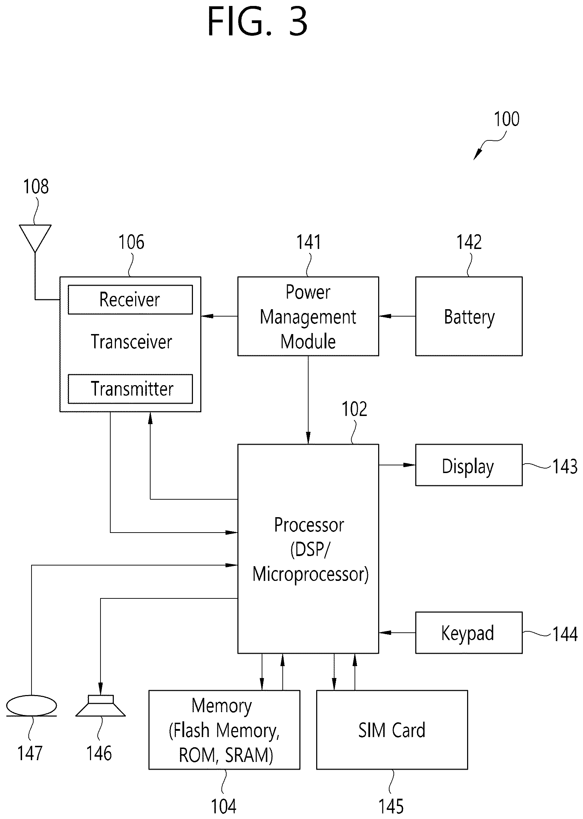

**FIG. 3 shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel® or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

**<6G System General>**

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 3 below. That is, Table 3 shows the requirements of the 6G system.

[Table 3]

| Per device peak data rate | 1 Tbps |
| --- | --- |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

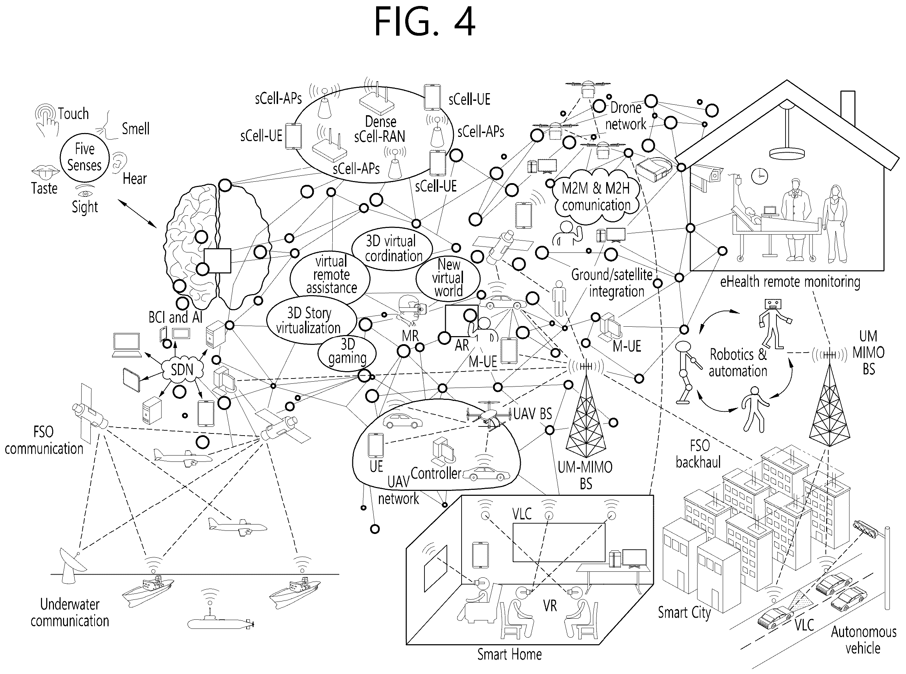

**FIG. 4 is a diagram showing an example of a communication structure that can be provided in a 6G system.**

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.

- Softwarization and virtualization: Softwarization and virtualization are two important functions which are the bases of a design process in a 5GB network in order to ensure flexibility, reconfigurability and programmability.

**<Core implementation technology of 6G system>**

Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural networks (SNN). Such a learning model is applicable.

THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

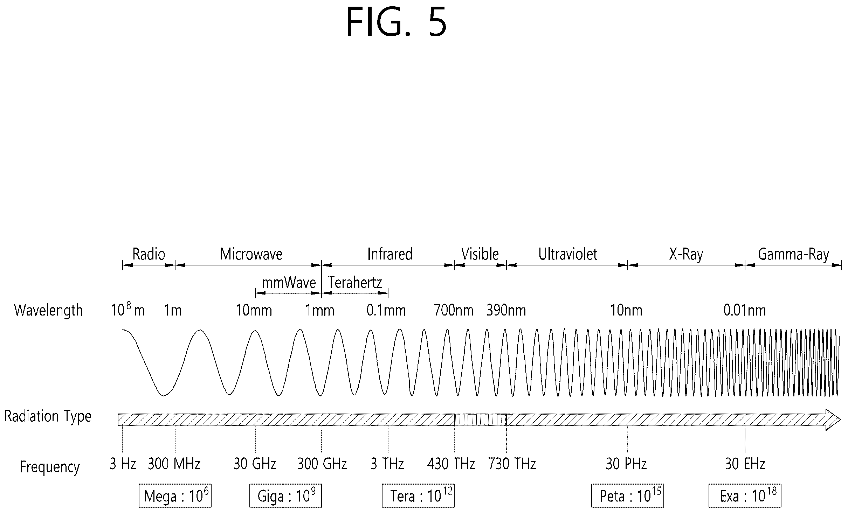

**FIG. 5 shows an example of an electromagnetic spectrum.**

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

Optical wireless technology

Optical wireless communication (OWC) is a form of optical communication that uses visible light, infrared light (IR), or ultraviolet light (UV) to transmit signals. OWC that operates in the visible light band (e.g., 390 to 750 nm) is commonly referred to as visible light communication (VLC). VLC implementations may utilize light-emitting diodes (LEDs). VLC can be used in a variety of applications, including wireless local area networks, wireless personal communications networks, and vehicular networks.

VLC has the following advantages over RF-based technologies. First, the spectrum occupied by VLC is free/unlicensed and can provide a wide range of bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communications security and privacy. The transmission medium of VLC-based networks, i.e., visible light, cannot penetrate walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSOs can operate in the near-infrared frequencies (750-1600 nm). Laser transmitters can be used in FSO implementations, and FSO can provide high data rates (e.g., 10 Gbit/s), offering a potential solution to backhaul bottlenecks.

These OWC technologies are planned for 6G communications, in addition to RF-based communications for any possible device-to-access network. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) can also be utilized for ultra-high resolution 3D mapping in 6G communications based on the optical band. LiDAR is a remote sensing method that uses near-infrared, visible, and ultraviolet light to shine a light on an object, and the reflected light is detected by a light sensor to measure distance. LiDAR can be used for fully automated driving of cars.

FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

Non-Terrestrial Networks (NTN)

6G systems will integrate terrestrial and aerial networks to support vertically expanding user communications. 3D BS will be provided via low-orbit satellites and UAVs. Adding a new dimension in terms of altitude and associated degrees of freedom makes 3D connectivity quite different from traditional 2D networks. NR considers Non-Terrestrial Networks (NTNs) as one way to do this. An NTN is a network or network segment that uses RF resources aboard a satellite (or UAS platform). There are two common scenarios for NTNs that provide access to user equipment: transparent payloads and regenerative payloads. The following are the basic elements of an NTN

- One or multiple sat-gateways connecting the NTN to the public data network.
- GEO satellites are fed by one or multiple satellite gateways deployed across the satellite target range (e.g., regional or continental coverage). We assume that a UE in a cell is served by only one sat-gateway.
- Non-GEO satellites that are continuously served by one or multiple satellite gateways at a time. The system shall ensure service and feeder link continuity between successive servicing satellite gateways with a time duration sufficient to allow mobility anchoring and handover to proceed.
- The feeder link or radio link between the satellite gateway and the satellite (or UAS platform).
- Service link or radio link between user equipment and the satellite (or UAS platform).
- Satellite (or UAS platform) capable of implementing transparent or regenerative (including onboard processing) payloads. Satellite (or UAS platform) generated beam A satellite (or UAS platform) generates multiple beams for a given service area, typically based on its field of view. The footprint of a beam is typically elliptical. The field of view of the satellite (or UAS platform) depends on the onboard antenna diagram and the minimum angle of attack.
- Transparent payload: Radio frequency filtering, frequency conversion, and amplification. Therefore, the waveform signal repeated by the payload remains unchanged.
- Regenerative payload: Radio frequency filtering, frequency conversion and amplification, demodulation/decryption, switching and/or routing, and coding/modulation. This is effectively the same as carrying all or part of the base station functions (e.g., gNB) on board a satellite (or UAS platform).
- Optionally, for satellite deployments, an inter-satellite link (ISL). This requires a regenerative payload on the satellite. ISL can operate at RF frequencies or in the optical band.
- The user equipment is serviced by the satellite (or UAS platform) within the targeted coverage area.

Typically, GEO satellites and UAS are used to provide continental, regional, or local services.

Typically, constellations in LEO and MEO are used to provide service in both the Northern and Southern Hemispheres. In some cases, constellations can also provide global coverage, including polar regions. The latter requires proper orbital inclination, sufficient beams generated, and links between satellites.

Quantum Communication

Quantum communication is a next-generation communication technology that can overcome the limitations of existing communication technologies such as security and ultra-high-speed computation by applying quantum mechanical properties to the field of information and communication. Quantum communication provides a means of generating, transmitting, processing, and storing information that cannot be expressed in the form of 0s and 1s according to the binary bit information used in conventional communication technologies. In conventional communication technologies, wavelengths or amplitudes are used to transmit information between the sender and receiver, but in quantum communication, photons, the smallest unit of light, are used to transmit information between the sender and receiver. In particular, in the case of quantum communication, quantum uncertainty and quantum irreversibility can be used for the polarization or phase difference of photons (light), so quantum communication has the characteristic of being able to communicate with perfect security. Quantum communication may also enable ultrafast communication using quantum entanglement under certain conditions.

Cell-free Communication

The tight integration of multiple frequencies and heterogeneous communication technologies is crucial for 6G systems. As a result, users will be able to seamlessly move from one network to another without having to create any manual configurations on their devices. The best network is automatically selected from the available communication technologies. This will break the limitations of the cell concept in wireless communications. Currently, the movement of users from one cell to another causes too many handovers in dense networks, resulting in handover failures, handover delays, data loss, and ping-pong effects. 6G cell-free communications will overcome all of these and provide better QoS.
Cell-free communication is defined as "a system in which multiple geographically distributed antennas (APs) cooperatively serve a small number of terminals using the same time/frequency resources with the help of a fronthaul network and a CPU." A single terminal is served by a set of multiple APs, called an AP cluster. There are several ways to form AP clusters, among which the method of organizing AP clusters with APs that can significantly contribute to improving the reception performance of a terminal is called the terminal-centric clustering method, and the configuration is dynamically updated as the terminal moves. This device-centric AP clustering technique ensures that the device is always at the center of the AP cluster and is therefore immune to inter-cluster interference that can occur when a device is located at the boundary of an AP cluster. This cell-free communication will be achieved through multi-connectivity and multi-tier hybrid technologies and different heterogeneous radios in the device.

Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

Integration of Wireless Communication and Sensing

An autonomous wireless network is a function for continuously detecting a dynamically changing environment state and exchanging information between different nodes. In 6G, sensing will be tightly integrated with communication to support autonomous systems.

Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

Reconfigurable Intelligent Metasurface

There has been a large body of research that considers the radio environment as a variable to be optimized along with the transmitter and receiver. The radio environment created by this approach is referred to as a Smart Radio Environment (SRE) or Intelligent Radio Environment (IRE) to emphasize its fundamental difference from past design and optimization criteria. Various terms have been proposed for reconfigurable intelligent antenna (or intelligent reconfigurable antenna technology) technologies to enable SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas to enhance communication stability and provide additional value-added services. RIS is an artificial surface made of electromagnetic materials that can alter the propagation of incoming and outgoing radio waves. Although RIS can be seen as an extension of massive MIMO, it has a different array structure and operating mechanism than massive MIMO. RIS has the advantage of low power consumption because it operates as a reconfigurable reflector with passive elements, i.e., it only passively reflects signals without using active RF chains. Furthermore, each of the passive reflectors in the RIS must independently adjust the phase shift of the incoming signal, which can be advantageous for the wireless communication channel. By properly adjusting the phase shift through the RIS controller, the reflected signals can be gathered at the target receiver to boost the received signal power.

In addition to reflecting radio signals, there are also RISs that can tune transmission and refractive properties, and these RISs are often used for outdoor to indoor (O2I) applications. Recently, STAR-RIS (Simultaneous Transmission and Reflection RIS), which provides transmission at the same time as reflection, has also been actively researched.

Metaverse

Metaverse is a combination of the words "meta" meaning virtual, transcendent, and "universe" meaning space. Generally speaking, the term is used to describe a three-dimensional virtual space in which social and economic activities are the same as in the real world.

Extended Reality (XR), a key technology that enables the metaverse, is the fusion of the virtual and the real, which can extend the experience of reality and provide a unique immersive experience. The high bandwidth and low latency of 6G networks will enable users to experience more immersive virtual reality (VR) and augmented reality (AR) experiences.

Autonomous Driving (Self-driving)

For fully autonomous driving, vehicles need to communicate with each other to alert each other to dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), in order to drive autonomously.

In order to maximize the performance of autonomous driving and ensure high safety, fast transmission speeds and low latency technologies are essential. In addition, in the future, autonomous driving will go beyond delivering warnings and guidance messages to the driver to actively intervene in the operation of the vehicle and directly control the vehicle in dangerous situations, and the amount of information that needs to be transmitted and received will be enormous, so 6G is expected to maximize autonomous driving with faster transmission speeds and lower latency than 5G.

Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

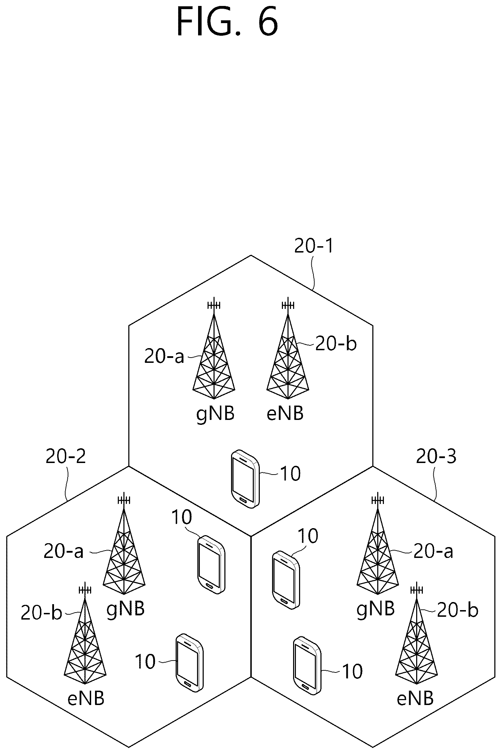

**FIG. 6 is a wireless communication system.**

As can be seen with reference to FIG. 6, the wireless communication system includes at least one base station (BS). The BS is divided into a gNodeB (or gNB) (20a) and an eNodeB (or eNB) (20b). The gNB (20a) supports 5th generation mobile communication. The eNB (20b) supports 4th generation mobile communication, i.e., LTE (long term evolution).

Each base station (20a and 20b) provides a communication service for a specific geographical area (generally called a cell) (20-1, 20-2, 20-3). The cell can be divided into a plurality of areas (called sectors).

A UE typically belongs to one cell, and the cell to which the UE belongs is called a serving cell. A base station that provides a communication service for a serving cell is called a serving base station (serving BS). Since the wireless communication system is a cellular system, there are other cells adjacent to the serving cell. The other cells adjacent to the serving cell are called neighbor cells. The base station that provides communication services to the neighbor cell is called a neighbor BS. The serving cell and the neighbor cell are determined relatively based on the UE.

Hereinafter, the downlink means communication from the base station (20) to the UE (10), and the uplink means communication from the UE (10) to the base station (20). In the downlink, the transmitter may be part of the base station (20), and the receiver may be part of the UE (10). In the uplink, the transmitter may be part of the UE (10), and the receiver may be part of the base station (20).

Meanwhile, the wireless communication system can be largely divided into the FDD (frequency division duplex) method and the TDD (time division duplex) method. According to the FDD method, uplink transmission and downlink transmission are performed while occupying different frequency bands. In the TDD method, uplink transmission and downlink transmission occupy the same frequency band and are performed at different times. The channel response of the TDD method is practically reciprocal. This means that the downlink channel response and the uplink channel response are almost the same in a given frequency range. Therefore, in a wireless communication system based on TDD, the downlink channel response has the advantage of being obtained from the uplink channel response. Since the entire frequency band is time-divided into uplink transmission and downlink transmission, the downlink transmission by the base station and the uplink transmission by the UE cannot be performed simultaneously. In a TDD system where uplink transmission and downlink transmission are divided into subframe units, uplink transmission and downlink transmission are performed in different subframes.

**<Operating Band in NR>**

The operating band in NR is as follows.

The operating band in Table 4 below is the operating band that has been refarmed from the operating band of LTE/LTE-A. This is called the FR1 band.

[Table 4]

| NR operating band | Uplink (UL) operating band | Downlink (DL) operating band | Duplex Mode |
|---|---|---|---|
| | $F_{UL\_low}$ - FUL_high | $F_{DL\_low}$ - $F_{DL\_high}$ | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |

(continued)

| NR operating band | Uplink (UL) operating band | Downlink (DL) operating band | Duplex Mode |
|---|---|---|---|
| | $F_{UL\_low}$ - FUL_high | $F_{DL\_low}$ - $F_{DL\_high}$ | |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

[Table 5]

| NR operating band | Uplink (UL) operating band | Downlink (DL) operating band | Duplex Mode |
|---|---|---|---|
| | $F_{UL\_low}$ - FUL_high | $F_{DL\_low}$ - $F_{DL\_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

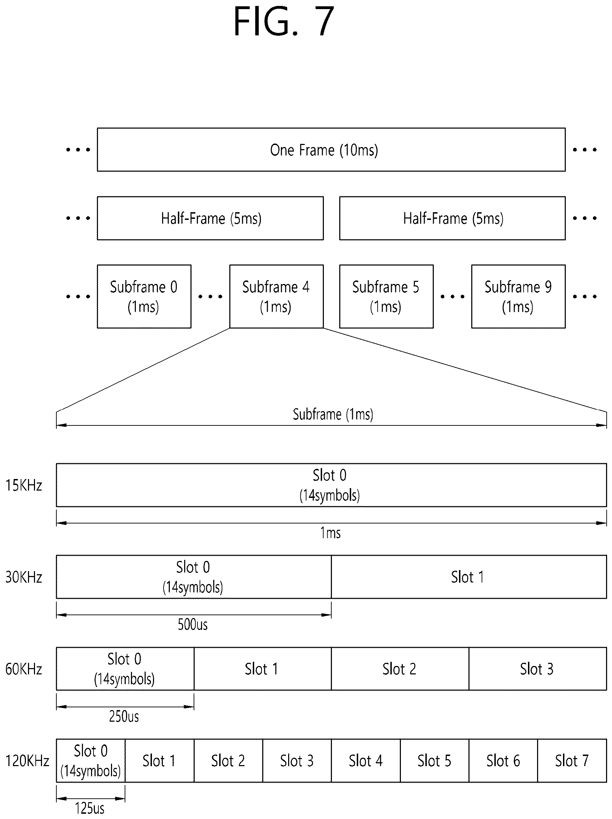

**FIG. 7 illustrates the structure of a radio frame used in NR.**

In NR, uplink and downlink transmissions are composed of frames. A radio frame has a length of 10 ms and is defined by two 5 ms half-frames (Half-Frames, HF). A half-frame is defined by five 1 ms subframes (Subframes, SF). A subframe is divided into one or more slots, and the number of slots in a subframe depends on the SCS (Subcarrier Spacing). Each slot contains 12 or 14 OFDM (A) symbols depending on the CP (cyclic prefix). When a normal CP is used, each slot contains 14 symbols. When an extended CP is used, each slot contains 12 symbols. Here, a symbol may include an OFDM symbol (or a CP-OFDM symbol), an SC-FDMA symbol (or a DFT-s-OFDM symbol).

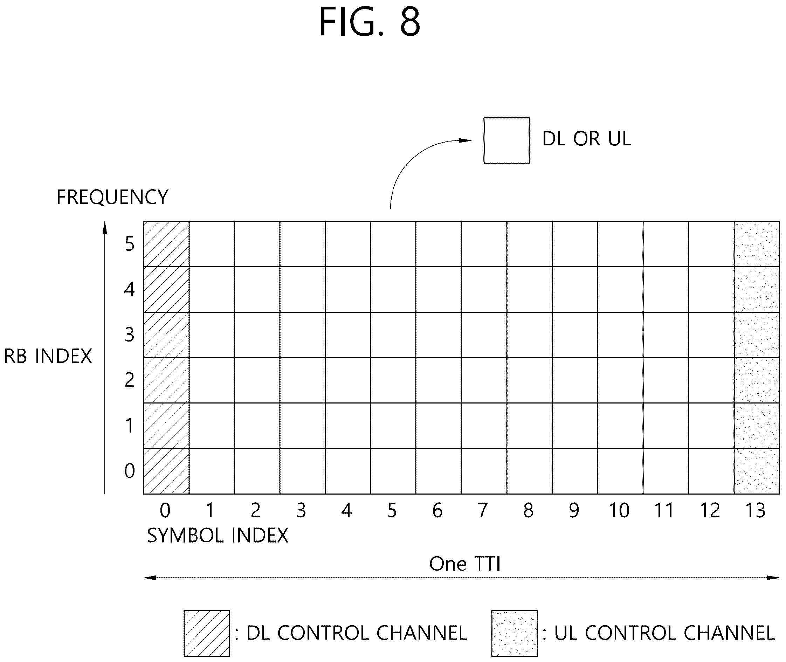

**FIG. 8 shows an example of subframe types in NR.**

The TTI (transmission time interval) illustrated in FIG. 8 may be called a subframe or slot for NR (or new RAT). The subframe (or slot) of FIG. 6 may be used in a TDD system of NR (or new RAT) to minimize data transmission delay. As illustrated in FIG. 4, the subframe (or slot) includes 14 symbols, similar to the current subframe. The symbols in the front of the subframe (or slot) may be used for a DL control channel, and the symbols in the back of the subframe (or slot) may be used for a UL control channel. The remaining symbols may be used for DL data transmission or UL data transmission. According to this subframe (or slot) structure, downlink transmission and uplink transmission may be sequentially performed in one subframe (or slot). Therefore, downlink data may be received within a subframe (or slot), and an uplink acknowledgement (ACK/NACK) may be transmitted within the subframe (or slot).

The structure of such subframes (or slots) may be called a self-contained subframe (or slot).

Specifically, the first N symbols in the slot may be used to transmit a DL control channel (hereinafter, DL control region), and the last M symbols in the slot may be used to transmit a UL control channel (hereinafter, UL control region). N and M are each integers greater than or equal to 0. The resource region (hereinafter, data region) between the DL control region and the UL control region may be used for DL data transmission or UL data transmission. For example, a PDCCH may be transmitted in the DL control region, and a PDSCH may be transmitted in the DL data region. A PUCCH may be transmitted in the UL control region, and a PUSCH may be transmitted in the UL data region.

Using such a structure of subframes (or slots) has the advantage of minimizing the final data transmission waiting time by reducing the time taken to retransmit data in which a reception error has occurred. In such a self-contained subframe (or slot) structure, a time gap may be required for the transition process from transmit mode to receive mode or from receive mode to transmit mode. For this purpose, some OFDM symbols when switching from DL to UL in the subframe structure can be set as a guard period (GP).

**<Support for various numerologies>**

A numerology may be defined by the CP (cycle prefix) length and the subcarrier spacing (SCS). A cell may provide multiple numerologies to a terminal. When the index of a numerology is represented as $\mu$, each subcarrier spacing and the corresponding CP length may be as shown in the table below.

[Table 6]

| $\mu$ | $f=2^{\mu}15$ [kHz] | CP |
|---|---|---|
| 0 | 15 | normal |
| 1 | 30 | normal |
| 2 | 60 | normal, extended |
| 3 | 120 | normal |
| 4 | 240 | normal |

For general CP, when the index of numerology is represented as $\mu$, the number of OFDM symbols per slot ($N^{slot}_{symb}$), the number of slots per frame ($N^{frame,\mu}_{slot}$), and the number of slots per subframe ($N^{subframe,\mu}_{slot}$) are as shown in the table below.

[Table 7]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |

(continued)

| μ | $N^{slot}_{symb}$ | $N^{frame,\mu}_{slot}$ | $N^{subframe,\mu}_{slot}$ |
|---|---|---|---|
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In the case of extended CP, when the index of the numerology is represented as $\mu$, the number of OFDM symbols per slot ($N^{slot}_{symb}$), the number of slots per frame ($N^{frame,\mu}_{slot}$), and the number of slots per subframe ($N^{subtrame,\mu}_{slot}$) are as shown in the table below.

[Table 8]

| μ | $N^{slot}_{symb}$ | $N^{frame,\mu}_{slot}$ | $N^{subframe,\mu}_{slot}$ |
|---|---|---|---|
| 2 | 12 | 40 | 4 |

**<Maximum output power>**

The following UE power classes define the maximum output power for all transmission bandwidths within the channel bandwidth of a shared spectrum channel access carrier, unless otherwise specified. The measurement period shall be at least one subframe (1 ms).

[Table 9]

| NR band | Class 1 (dBm) | Tolerance (dB) | Class 2 (dBm) | Tolerance (dB) | Class 3 (dBm) | Tolerance (dB) | Class 5 (dBm) | Tolerance (dB) |
|---|---|---|---|---|---|---|---|---|
| n46 | | | | | | | 20 | +2/-3 |
| n96 | | | | | | | 20 | +2/-3 |
| n10 2 | | | | | | | 20 | +2/-3 |
| NOTE 1: $P_{PowerClass}$ is the maximum UE power specified without taking into account the tolerance<br>NOTE 2: Power class 5 is default power class unless otherwise stated. | | | | | | | | |

The UE operation shall meet the following additional requirements for the maximum mean transmission power density specified in Table 10 when the NS receives the signal and the transmission overlaps part of a specific frequency range. If the transmission overlaps multiple frequency ranges, the lowest power density requirement applies.

[Table 10]

| NR Band | NS value | Channel bandwidth (MHz) | Frequency range (MHz) | Maximum mean power density (dBm/MHz) |
|---|---|---|---|---|
| n46 | NS_28 | 20, 40, 60, 80 | 5150 - 5350 | 10 |
| | | | 5470 - 5725 | |
| | NS_29 | 20 | 5170 - 5330 | 10 |
| | | | 5490 - 5730 | |
| | | 40 | 5170 - 5330 | 7 |
| | | | 5490 - 5730 | |
| | | 60, 80 | 5170 - 5330 | 4 |
| | | | 5490 - 5730 | |

(continued)

| NR Band | NS value | Channel bandwidth (MHz) | Frequency range (MHz) | Maximum mean power density (dBm/MHz) |
|---|---|---|---|---|
| | NS_30 | 20, 40, 60, 80 | 5150 - 5350 | 11 |
| | | | 5470 - 5725 | |
| | NS_31 | 20 | 5150 - 5230 | 10 |
| | | | 5250 - 5350 | |
| | | | 5470 - 5725 | |
| | | | 5725 - 5850 | |
| | | | 5230 - 5250 | 4 |
| | | 40 | 5150 - 5230 | 7 |
| | | | 5250 - 5350 | |
| | | | 5470 - 5725 | |
| | | | 5725 - 5850 | |
| | | | 5230 - 5250 | 4 |
| | | 60, 80 | 5150 - 5230 | 4 |
| | | | 5250 - 5350 | |
| | | | 5470 - 5725 | |
| | | | 5725 - 5850 | |
| | | | 5230 - 5250 | |
| n96 | NS_53 | 20, 40, 60, 80 | 5925 - 7125 | -1 |
| | NS_54 | 20, 40, 60, 80 | 5925 - 6425 | 17 |
| | | | 6525 - 6875 | |
| | NS_59 | 20, 40, 60, 80 | 5925 - 7125 | 5 |
| | NS_60 | 20, 40, 60, 80 | 5925 - 7125 | 2 |
| | NS_61 | 20, 40, 60, 80 | 5925 - 6425 | 1 |
| n102 | NS_58 | 20, 40, 60, 80 | 5945 - 6425 | 10 |

For NS_61, it may correspond to the n96 band. For NS_61, the channel bandwidth (CBW) may be 20, 40, 60, or 80 MHz. For NS_61, the frequency range may be 5925-6425 MHz.

In this specification, a method for configuring transmit power for simultaneous operation of Uu (NR) in a licensed band and SL (SL-U) in an unlicensed band may be proposed.

In this specification, simultaneous operation of Uu (NR) in a licensed band and SL (SL-U) in an unlicensed band may be denoted as 'NR+SL-U'. Simultaneous operation of Uu (NR) in a licensed band and SL in a licensed band may be denoted as 'NR+SL'.

A UE may indicate both UE capability and power class to the network.

The network may provide the UE with information such as allowed UE power (e.g., p-Max, sl-txMaxPower-r16), bandwidth, and modulation order.

Based on the received information, the UE may configure its transmission power and transmit a transmission signal. Furthermore, the UE may report its configured transmission power and power headroom. Power headroom may be the additional power a terminal can transmit beyond its current transmission power relative to its power class.

signals for UE capability related to power classes may be as follows:

i. Capability of power class per band

- ue-PowerClass: Indicates the power class for the Uu link.
- ue-PowerClass-V1610: Indicates the power class for the Uu link.

- ue-PowerClass-v1700: Indicates the power class for the Uu link.
- ue-PowerClassSidelink-r16: Indicates power class 2 and power class 3 for the sidelink.


ii. Capability of power class per band combination


- powerClass-v1530: Indicates the power class for the Uu link.
- powerClass-v1610: Indicates the power class for the Uu link.
- powerClassNRPart-r16: Indicates the power class for the Uu link.
- intraBandPowerClass-r16: Indicates the power class for the Uu link.
- intrabandConcurrentOperationPowerClass-r16: Indicates the power class for intra-band concurrent NR+SL.


Related signalings from NW to UE may be as follows:


- p-Max: it may correspond to $P_{EMAX,C}$ in UE configured transmission power below. It is for Uu uplink transmission power.
- sl-MaxTxPower-r16: it may be for SL transmission power.


sl-MaxTxPower-r16 field indicates the maximum transmission power for transmission on PSSCH and PSCCH.

sl-MaxTxPower-r16 may be equal to SL-TxPower-r16 (-30~33dBm)

The IE SL-TxPower may be used to limit the UE's sidelink transmission power on a carrier frequency.

For supporting Power class 5, a capability of power class 5 per band needs to be defined. The capability of power class 5 per band of UE may include ue-PowerClassSidelink-r18, which may indicate Power Class 5.

For supporting inter band con-current operation of NR and SL, or inter band con-current operation of NR and SL-U, a capability of power class per band combination needs to be defined. The UE may inform the capability of power class per band combination to NW.

UE capability of power class per band combination may include interbandConcurrentOperationPowerClass-r18. interbandConcurrentOperationPowerClass-r18 may be the maximum UE power of the terminal for concurrent operation on NR uplink and sidelink in unlicensed bands.

Regarding UE capability of power class per band combination, interbandConcurrentOperationPowerClass-r18 may be for inter-band concurrent NR+SL or inter-band concurrent NR+SL-U. interbandConcurrentOperationPowerClass-r18 may be $P_{PowerClass,ConCurrent}$. interbandConcurrentOperationPowerClass-r18 may be $P_{PowerClass,ConCurrent}$. As $P_{PowerClass,ConCurrent}$, the UE may indicate(or report), to the network, power class 5, power class 3, or power class 2.

UE capability of maximum transmission duty cycle may include maxTxDutyCycle-interBandConcurrentOperation-PC2-FR1.

Th UE may transmit, to the network, UE capability including UE capability of power class per band, UE capability of power class per band combination, and/or UE capability of maximum transmission duty cycle.

For supporting i) inter-band con-current operation of NR and SL or ii) inter-band con-current operation of NR and SL-U, NW needs to indicates the maximum total transmit power to be used by the UE across 'NR+SL-U' or 'NR+SL' in frequency range 1(FR1). For example, 'p-maxUE-FR1' may be the maximum total transmit power.


**1. NR+SL-U inter band con-current operation**

SL-U may be designed to be operated with PC5 interface in unlicensed band in FR1. Half Duplex and PC5 interface may be used for SL-U operation.

NR may be designed to be operated with Uu interface in licensed band in FR1.

For example, the following band combinations may be considered for the inter-band con-current operation of Uu and SL-U:

SL_n77A-n96A, here, n77 may be for Uu operation in TDD and n96 is for SL-U operation
SL_n48A-n46A, here, n48 may be for Uu operation in TDD and n46 is for SL-U operation
SL_n7A-n46A, here, n7 may be for Uu operation in FDD and n46 is for SL-U operation


(1) Band combination for 'NR+SL-U' con-current operation

Table 11 shows the band combinations for 'NR+SL-U' con-current operation. Other band combinations with NR licensed + SL unlicensed are not precluded

[Table 11]

| 'NR+SL-U' inter-band con-current operating band | NR or SL-U Operating Band | Interface |
|---|---|---|
| SL_n77A-n96A | n77 | Uu |
| | n96 | PC5 |
| SL_n48A-n46A | n48 | Uu |
| | n46 | PC5 |
| SL_n48A-n46A | n7 | Uu |
| | n46 | PC5 |

Table 12 shows the each operating band.

[Table 12]

| SL-U operating Band | Sidelink (SL) Transmission operating band $F_{UL\_low}$ - FUL_high | Sidelink (SL) Reception operating band $F_{DL\_low}$ - $F_{DL\_high}$ | Duplex Mode | Interface |
|---|---|---|---|---|
| n46 | 5150 MHz - 5925 MHz | 5150 MHz - 5925 MHz | HD | PC5 |
| n96 | 5925 MHz - 7125 MHz | 5925 MHz - 7125 MHz | HD | PC5 |
| n102 | 5925 MHz - 6425 MHz | 5925 MHz - 6425 MHz | HD | PC5 |
| **NR operating Band** | **Uplink (UL) operating band BS receive / UE transmit** $F_{UL\_low}$ - FUL_high | **Downlink (DL) operating band BS transmit / UE receive** $F_{DL\_low}$ - $F_{DL\_high}$ | **Duplex Mode** | **Interface** |
| n48 | 3550 MHz - 3700 MHz | 3550 MHz - 3700 MHz | TDD | Uu |
| n77 | 3300 MHz - 4200 MHz | 3300 MHz - 4200 MHz | TDD | Uu |
| n7 | 2500 MHz - 2570 MHz | 2620 MHz - 2690MHz | FDD | Uu |

(2) Channel bandwidth for 'NR+SL-U' con-current operation

For 'NR+SL-U' inter-band con-current operation in FR1, the each channel bandwidth for each operating band is specified in Table 13.

[Table 13]

| 'NR+SL-U' inter-band con-current operating configuration | NR or SL-U Band | Interface | Channel bandwidth (MHz) (NOTE 3) | Bandwidth combination set |
|---|---|---|---|---|
| SL_n77A-n96A | n77 | Uu | 10, 15, 20, 25, 30, 40, 50, 60, 70, 80, 90, 100 | 0 |
| | n96 | PC5 | 20, 40, 60, 80, 100 | |
| SL_n48A-n46A | n48 | Uu | 5, 10, 15, 20, 30, 40, 50, 60, 70, 80, 90, 100 | 0 |
| | n46 | PC5 | 20, 40, 60, 80, 100 | |
| SL_n7A-n46A | n7 | Uu | 5, 10, 15, 20, 25, 30, 35, 40, 50 | 0 |
| | n46 | PC5 | 20, 40, 60, 80, 100 | |

## 2. NR+SL-U UE maximum output power

For the 'NR+SL-U' inter-band con-current operation, the maximum output power needs to be specified for each operating band. The period of measurement may be at least one sub frame (1ms).

If each band has separate antenna connectors, maximum output power may be defined as the sum of maximum output power from each UE antenna connector.

(1) Case 1: In case power class for 'NR+SL-U' inter-band con-current operation is not defined.

For case 1, power class for NR and power class for SL-U may be indicated separately.

Table 14 shows each power class of UE supporting 'NR+SL-U' con-current operation.

For example, table 14 shows Power Class for 'NR+SL-U' inter-band con-current combination (two bands)

[Table 14]

| 'NR+SL-U' inter-band con-current operating band configuration | NR or SL-U band | Power Class 2 (dBm) | Tolerance (dB) | Power Class 3 (dBm) | Tolerance (dB) | Power Class 5 (dBm) | Tolerance (dB) |
|---|---|---|---|---|---|---|---|
| SL_n77A-n96A | n77 | 26 | +2/-3 | 23 | +2/-3 | | |
| | n96 | | | 23 | +2/-3 | 20 | +2/-3 |
| SL_n48A-n46A | n48 | | | 23 | +2/-3 | | |
| | n46 | | | 23 | +2/-3 | 20 | +2/-3 |
| SL_n7A-n46A | n7 | | | 23 | +2/-2 | | |
| | n46 | | | 23 | +2/-3 | 20 | +2/-3 |
| NOTE 1: For the con-current band combinations, the simultaneous transmission and reception of sidelink and Uu interfaces can be supported while operation is agnostic of the service used on each interface.<br>NOTE 2: $P_{PowerClass}$ may be the maximum output power specified without taking into account the tolerance for each operating band.<br>NOTE 3: For inter-band con-current operation, the aggregation power may apply to the total transmitted power over all component carriers (per UE).<br>NOTE 4: Power Class 3 may be the default power class for 'NR' unless otherwise stated. Power Class 5 may be the default power class for 'SL-U' unless otherwise stated. | | | | | | | |

For example, for SL_n77A-n96A, power Class of the UE may be power class 3 or power class 2 for 'NR' operation. power Class of the UE may be power class 5 for SL-U operation.

For example, for SL_n48A-n46A, power Class of the UE may be power class 3 for 'NR' operation. power Class of the UE may be power class 5 for 'SL-U' operation

For example, for SL_n7A-n46A, power Class of the UE may be power class 3 for "NR" operation. power Class of the UE may be power class 5 for 'SL-U' operation

(1)-1. NR link,

If a UE supports a different power class than the default UE power class for 'NR' band and the supported power class enables higher maximum output power than that of the default power class (=power class 3):

- if the field of UE capability maxUplinkDutyCycle-PC2-FR1 is absent and the percentage of NR uplink symbols transmitted in a certain evaluation period is larger than 50% (The exact evaluation period is no less than one radio frame), may apply all requirements for the default power class to the supported power class and set the configured transmitted power as case 1a.
- if the field of UE capability maxUplinkDutyCycle-PC2-FR1 is not absent and the percentage of NR uplink symbols transmitted in a certain evaluation period is larger than maxUplinkDutyCycle-PC2-FR1 as defined in TS38.331 (The exact evaluation period is no less than one radio frame), may apply all requirements for the default power class to the supported power class and set the configured transmitted power as case 1a.
- if the IE 'p-max' is provided and set to the maximum output power of the default power class or lower, may apply all requirements for the default power class to the supported power class and set the configured transmitted power as case 1a.
- Otherwise, may apply all requirements for the supported power class and set the configured transmitted power as specified as case 1a.

(1)-2. SL-U link

If a UE supports a different power class than the default UE power class for 'SL-U' band and the supported power class enables higher maximum output power than that of the default power class (=power class 5):

- if the IE 'sl-MaxTxPower-r16' is provided and set to the maximum output power of the default power class or lower, may apply all requirements for the default power class to the supported power class and set the configured transmitted power as case 1a.
-
- Otherwise, may apply all requirements for the supported power class and set the configured transmitted power as specified as case 1a.

(2) Case 2: in case power class for 'NR+SL-U' inter-band con-current operation is defined.

The power class may be applied as Table 14 with the capability of power class per band combination of 'NR+SL-U' (e.g, 'interbandConcurrentOperationPowerClass-r18').

For the 'NR+SL-U' inter-band con-current operation, the following UE Power Classes may define the maximum output power for any transmission bandwidth within the aggregated channel bandwidth. The maximum output power may be measured as the sum of the maximum output power at each UE antenna connector. The period of measurement may be at least one sub frame (1ms). UE maximum output power may be measured over all component carriers from different bands. If each band has separate antenna connectors, maximum output power may be measured as the sum of maximum output power at each UE antenna connector.

Table 15 shows Power Class for 'NR+SL-U' inter-band con-current combination (two bands).

[Table 15]

| 'NR+SL-U' inter-band con-current operating band configuration | NR or SL-U band | Power Class 2 (dBm) | Tolerance (dB) | Power Class 3 (dBm) | Tolerance (dB) |
|---|---|---|---|---|---|
| SL_n77A-n96A | n77 | 26 | +2/-3 | 23 | +2/-3 |
| | n96 | | | | |
| SL_n48A-n46A | n48 | | | 23 | +2/-3 |
| | n46 | | | | |
| SL_n7A-n46A | n7 | | | 23 | +2/-2 |
| | n46 | | | | |
| NOTE 1: For the con-current band combinations, the simultaneous transmission and reception of sidelink and Uu interfaces can be supported while operation is agnostic of the service used on each interface. | | | | | |
| NOTE 2: Power Class 3 may be the default power class for 'NR+SL-U' unless otherwise stated. | | | | | |

(2)-1. NR+SL-U

If a UE supports a different power class than the default UE power class for 'NR+SL-U' Inter-band combination and the supported power class enables higher maximum output power than that of the default power class:

- if the field of UE capability maxTxDutyCycle-interBandConcurrentOperation-PC2-FR1 is not absent and the average percentage of NR uplink symbols transmitted and SL-U symbols transmitted in a certain evaluation period is larger than maxTxDutyCycle-interBandConcurrentOperation-PC2-FR1 (The exact evaluation period is no less than one radio frame), may apply all requirements for the default power class to the supported power class and set the configured transmitted power as case 2a.
- if the IE 'p-maxUE-FR1' is provided and set to the maximum output power of the default power class or lower; (Here, 'p-maxUE-FR1' is IE which indicates the maximum total transmit power to be used by the UE across 'NR+SL-U' in frequency range 1.), may apply all requirements for the default power class to the supported power class and set the configured transmitted power as case 2a.
- otherwise, may apply all requirements for the supported power class and set the configured transmitted power as specified as case 2a.

For example, power class requirements may be determined based on the maximum transmission duty cycle (maxTxDutyCycle-interBandConcurrentOperation-PC2-FR1).

The NR+SL-U terminal may determine the configured maximum output power based on the determined power class requirements.

### 3. configured transmitted power of NR+SL-U UE

When a UE is configured for simultaneous NR V2X sidelink and NR uplink transmissions for inter-band con-current operation, the UE may be allowed to set its configured maximum output power $P_{CMAX,c,NR}$ and $P_{CMAX,c,V2X}$ for the configured NR uplink carrier and the configured NR V2X carrier, respectively, and its total configured maximum output power $P_{CMAX}$.

(1) Case 1a: in case power class for 'NR+SL-U' inter-band con-current operation is not defined.

(1)-1. NR link

The configured maximum output power $P_{CMAX\ c,NR}(p)$ in slot $p$ for the configured NR uplink carrier may be set within the bounds:

-

$$P_{CMAX\_L,c,NR}(p) \leq P_{CMAX,c,NR}(p) \leq P_{CMAX\_H,c,NR}(p)$$

where $P_{CMAX\_L,c,NR}$ and $P_{CMAX\_H,c,NR}$ may be the limit as follows:

-

$$P_{CMAX\_L,c,NR} = \text{MIN} \{P_{EMAX,c} - \Delta T_{C,c}, (P_{PowerClass} - \Delta P_{PowerClass}) - \text{MAX(MAX}(MPR_c + \Delta MPR_c, \text{A-MPR}_c) + \Delta T_{IB,c} + \Delta T_{C,c} + \Delta T_{RxSRS}, \text{P-MPR}_c) \}$$

-

$$[292] \qquad - P_{CMAX\_H,c,NR} = \text{MIN} \{P_{EMAX,c}, P_{PowerClass} - \Delta P_{PowerClass}\}$$

or

-

$$P_{CMAX\_L,c,NR} = \text{MIN} \{ P_{EMAX,ConCurrent}, P_{EMAX,c} - \Delta T_{C,c}, (P_{PowerClass} - \Delta P_{PowerClass}) - \text{MAX(MAX}(MPR_c + \Delta MPR_c, \text{A-MPR}_c) + \Delta T_{IB,c} + \Delta T_{C,c} + \Delta T_{RxSRS}, \text{P-MPR}_c) \}$$

-

$$P_{CMAX\_H,c,NR} = \text{MIN} \{ P_{EMAX,ConCurrent}, P_{EMAX,c}, P_{PowerClass} - \Delta P_{PowerClass} \}$$

Here, $P_{EMAX,c}$ may be the value given by either the *p-Max* IE or the field *additionalPmax* of the *NR-NS-PmaxList IE.*

Here, $P_{PowerClass}$ may be the maximum UE power specified for NR in Table 14.

Here, $P_{EMAX,ConCurrent}$ may be the value given by the 'p-maxUE-FR1'.

(1)-2. SL-U link

The configured maximum output power $P_{CMAX\ c,SL}(q)$ in slot $q$ for the configured SL-U carrier may be set within the bounds:

-

$$- P_{CMAX,c,SL}(q) \leq P_{CMAX\_H,c,SL}(q)$$

where $P_{CMAX\_H,c,SL}$ may be the limit as below:

- 

$$P_{CMAX\_H,c,SL} = MIN \{P_{EMAX,c}, (P_{PowerClass, SL} - \Delta P_{PowerClass, SL}), P_{Regulatory,c} \}$$

or

- 

$$P_{CMAX\_H,c,SL} = MIN \{\{ P_{EMAX,ConCurrent}, P_{EMAX,c}, (P_{PowerClass, SL} - \Delta P_{PowerClass, SL}), P_{Regulatory,c} \}$$

Here, $P_{CMAX,f,c}$ may be configured for PSSCH\PSCCH, S-SSB and PSFCH, respectively.

Here, $P_{EMAX,ConCurrent}$ may be the value given by the 'p-maxUE-FR1'.

Here, $P_{PowerClass,SL}$ may be the maximum UE power specified for SL-U in Table 14.

Here, $\Delta P_{PowerClass,SL}$ may be:

- 3 dB for a power class 3 capable UE and 6 dB for a power class 2 capable UE when requirements of default power class are applied;
- 3 dB for a power class 2 capable UE when requirements of power class 3 are applied
- 0dB otherwise.

Here, $P_{Regulatory,c}$ may be:

- $P_{Regulatory,c} = 10 - G_{post connector}$ dBm when the SL UE is within the protected zone of CEN DSRC tolling system and operating in Band n47;
- 

$$P_{Regulatory,c} = 33 - G_{post connector} \text{ dBm}$$

otherwise.

(1)-3. Total UE configured maximum output power: $P_{CMAX(p,q)}$

The total UE configured maximum output power $P_{CMAX}(p,q)$ in a slot $p$ of NR uplink carrier and a slot $q$ of SL-U that overlap in time may be set within the following bounds for synchronous and asynchronous operation unless stated otherwise:

- 

$$P_{CMAX\_L}(p,q) \leq P_{CMAX}(p,q) \leq P_{CMAX\_H}(p,q)$$

$P_{CMAX\_L}(p,q)$ may be minimum limit of configured maximum output power. $P_{CMAX\_H}(p,q)$ may be may be maximum limit of configured maximum output power.

As to the above equation, Example 1 or Example 2 may be applied.

1) Example 1

$P_{CMAX\_L}(p,q)$ may be:

- $P_{CMAX\_L,c,NR}(p)$ or
- $P_{CMAX\_L,c,SL}(q)$ if SL-U priority is higher than NR, or
- $P_{CMAX\_L,c,NR}(p)$ if NR priority is higher than SL-U

$P_{CMAX\_L}(p,q)$ may be determined, based on priority for SL-U and priority for NR uplink.

Here, $P_{CMAX\_H}(p,q)$ may be:

-

$$P_{CMAX\_H}(p,q) = 10 \log_{10} [p_{CMAX\_H,c,NR}(p) + p_{CMAX\_H,c,SL}(q)]$$

Here, $p_{CMAX\_H,c,SL}$ and $p_{CMAX\_H,c,NR}$ may be the limits $P_{CMAX\_H,c,SL}(q)$ and $P_{CMAX\_H,c,NR}(p)$ expressed in linear scale.

If the UE:

- is capable of simultaneous transmissions on the UL and on the SL in two respective carriers,
- would transmit on the UL and on the SL in the two respective carriers,
- the transmission on the UL would overlap with the transmission on the SL over a time period, and
- the total UE transmission power over the time period would exceed $P_{CMAX}$

the UE may:

- reduce the power for the UL transmission prior to the start of the UL transmission, if the SL transmission has higher priority than the UL transmission, so that the total UE transmission power would not exceed $P_{CMAX}$.
- reduce the power for the SL transmission prior to the start of the SL transmission, if the UL transmission has higher priority than the SL transmission as determined, so that the total UE transmission power would not exceed $P_{CMAX}$.

2) Example 2

$P_{CMAX\_L}(p,q)$ and $P_{CMAX\_H}(p,q)$ may be:

-

$$P_{CMAX\_L\,(p,q)} = MIN\ \{10^*\log 10\ [p_{CMAX\_L,c,NR}(p) + p_{CMAX\_L,c,SL}(q)],\ P_{PowerClass,con\text{-}current},\ P_{EMAX,con\text{-}current}\}$$

-

$$P_{CMAX\_H\,(p,q)} = MIN\ \{10^*\log 10\ [p_{CMAX\_H,c,NR}(p) + p_{CMAX\_H,c,SL}(q)],\ P_{PowerClass,con\text{-}current},\ P_{EMAX,con\text{-}current}\}$$

Here, $P_{PowerClass,con\text{-}current}$ may be the maximum UE power specified as MOP.

Here, $P_{EMAX,con\text{-}current}$ may be the value indicated by p-NR-FR1 or by p-UE-FR1 whichever is the smallest if both are present.

$P_{PowerClass,con\text{-}current}$ may be indicated by 'interbandConcurrentOperationPowerClass-r18' or the existing 'powerClass-v1530' or 'powerClass-v1610' or 'ue-PowerClassPerBandPerBC-r17'.

If a UE:

- is capable of simultaneous transmissions on the UL and on the SL in two respective carriers,
- would transmit on the UL and on the SL in the two respective carriers,
- the transmission on the UL would overlap with the transmission on the SL over a time period, and
- the total UE transmission power over the time period would exceed $P_{CMAX}$

the UE may:

- reduce the power for the UL transmission prior to the start of the UL transmission, if the SL transmission has higher priority than the UL transmission, so that the total UE transmission power would not exceed $P_{CMAX}$
- reduce the power for the SL transmission prior to the start of the SL transmission, if the UL transmission has higher priority than the SL transmission as determined, so that the total UE transmission power would not exceed $P_{CMAX}$

(2) Case 2a: in case power class for 'NR+SL-U' inter-band con-current operation is defined.

(2)-1. NR link

The configured maximum output power $P_{CMAX\ c,NR}(p)$ in slot $p$ for the configured NR uplink carrier may be set within the bounds:

-

$$P_{CMAX\_L,c,NR}(p) \leq P_{CMAX,c,NR}(p) \leq P_{CMAX\_H,c,NR}(p)$$

where $P_{CMAX\_L,c,NR}$ and $P_{CMAX\_H,c,NR}$ may be the limit:

-

$P_{CMAX\_L,c,NR}$ = MIN { $P_{EMAX,ConCurrent}$ , $P_{EMAX,c^-}$ $\Delta_{TC,c}$, $(P_{PowerClass} - \Delta P_{PoweClass})$ - MAX(MAX($MPR_c$ +$\Delta MPR_c$, A-$MPR_c$)+ $\Delta T_{IB,c}$ + $\Delta T_{C,c}$ + $\Delta T_{RxSRS}$, P-$MPR_c$) }

-

$$P_{CMAX\_H,c,NR} = MIN \{ P_{EMAX,ConCurrent}, P_{EMAX,c}, P_{PowerClass} - \Delta P_{PowerClass} \}$$

or

-

$P_{CMAX\_L,c,NR}$ = MIN { $P_{EMAX,ConCurrent}$ , $(P_{PowerClass,ConCurrent} - \Delta P_{PowerClass,ConCurrent})$, $P_{EMAX,c^-}$ $\Delta T_{C,c}$, $(P_{PowerClass} -\Delta P_{PowerClass})$ - MAX(MAX($MPR_c$+$\Delta MPR_c$, A-$MPR_c$)+ $\Delta T_{IB,c}$ + $\Delta T_{C,c}$+$\Delta T_{RxSRS}$, P-$MPR_c$) }

- $PCMAX\_H,c,NR = MIN \{ P_{EMAX,ConCurrent}, (P_{PowerClass,ConCurrent} - \Delta P_{PowerClass,ConCurrent}), P_{EMAX,c}, P_{PowerClass} - \Delta P_{PowerClass} \}$

Here, $P_{EMAX,c}$ may be the value given by either the *p-Max* IE or the field *additionalPmax* of the *NR-NS-PmaxList IE*.
Here, $P_{PowerClass}$ may be the maximum UE power specified for NR in Table 14.
Here, $P_{EMAX,ConCurrent}$ may be the value given by the 'p-maxUE-FR1'.
Here, $P_{PowerClass,ConCurrent}$ may be the total maximum UE power.
Here, $\Delta P_{PowerClass,ConCurrent}$ may be 3dB for a power class 2 capable UE (total power based) when requirements of default power class is applied and 0dB otherwise..

(2)-2. SL-U link

The configured maximum output power $P_{CMAX\,c,SL}$ (q) in slot *q* for the configured SL-U carrier may be set within the bounds:

-

$$P_{CMAX,c,SL}(q) \leq P_{CMAX\_H,c,SL}(q)$$

where $P_{CMAX\_H,c,SL}$ may be the limit as below:

-

$$P_{CMAX\_H,c,SL} = MIN \{\{ P_{EMAX,ConCurrent}, P_{EMAX},c, (P_{PowerClass, SL} - \Delta P_{PowerClass, SL}), P_{Regulatory,c} \}, \text{ or}$$

-

$P_{CMAX\_H,c,SL}$ = MIN {{ $P_{EMAX,ConCurrent}$ , $P_{EMAX,c}$, $(P_{PowerClass,ConCurrent} - \Delta P_{PowerClass,ConCurrent})$, $(P_{PowerClass,}$ SL- $\Delta P_{PowerClass}$, SL), $P_{Regulatory,c}$ }

Here, $P_{CMAX,f,c}$ may be configured for PSSCH\PSCCH, S-SSB and PSFCH, respectively.
Here, $P_{EMAX,ConCurrent}$ may be the value given by the 'p-maxUE-FR1'.
Here, $P_{PowerClass,SL}$ may be the maximum UE power specified for SL-U in Table 14.
Here, $\Delta P_{PowerClass,SL}$ may be:

- 3 dB for a power class 3 capable UE and 6 dB for a power class 2 capable UE when requirements of default power class are applied;
- 3 dB for a power class 2 capable UE when requirements of power class 3 are applied
- 0dB otherwise.

Here, $P_{PowerClass,ConCurrent}$ may be the total maximum UE power.

Here, $\Delta P_{PowerClass,ConCurrent}$ may be 3dB for a power class 2 capable UE (total power based) when requirements of default power class is applied and 0dB otherwise.

$P_{Regulatory,c}$ may be:

- $P_{Regulatory,c} = 10 - G_{post\ connector}$ dBm when the SL UE is within the protected zone of CEN DSRC tolling system and operating in Band n47;
- $P_{Regulatory,c} = 33 - G_{post\ connector}$ dBm otherwise.

(2)-3. Total UE configured maximum output power : $P_{CMAX(p,q)}$

The total UE configured maximum output power $P_{CMAX(p,q)}$ in a slot p of NR uplink carrier and a slot q of SL-U that overlap in time may be set within the following bounds for synchronous and asynchronous operation unless stated otherwise:

-

$$P_{CMAX\_L}(p,q) \leq P_{CMAX}(p,q) \leq P_{CMAX\_H}(p,q)$$

In relation to the above equation, Example 1 or Example 2 described below may be applied.

1) Example 1

$P_{CMAX\_L}(p,q)$ may be:

- $P_{CMAX\_L,c,NR}(p)$ or
- $P_{CMAX\_L,c,,SL}(q)$ if SL-U priority is higher than NR or
- $P_{CMAX\_L,c,NR}(p)$ if NR priority is higher than SL-U

Here, $P_{CMAX\_H}(p,q)$ may be:

-

$$P_{CMAX\_H}(p,q) = 10 \log_{10}\left[p_{CMAX\_H,c,NR}(p) + p_{CMAX\_H,c,SL}(q)\right]$$

Here, $p_{CMAX\_H,c,SL}$ and $p_{CMAX\_H,c,NR}$ may be the limits $P_{CMAX\_H,c,SL}(q)$ and $P_{CMAX\_H,c,NR}(p)$ expressed in linear scale.

If a UE:

- is capable of simultaneous transmissions on the UL and on the SL in two respective carriers,
- would transmit on the UL and on the SL in the two respective carriers,
- the transmission on the UL would overlap with the transmission on the SL over a time period, and
- the total UE transmission power over the time period would exceed $P_{CMAX}$,

the UE may:

- reduce the power for the UL transmission prior to the start of the UL transmission, if the SL transmission has higher priority than the UL transmission, so that the total UE transmission power would not exceed $P_{CMAX}$
- reduce the power for the SL transmission prior to the start of the SL transmission, if the UL transmission has higher priority than the SL transmission as determined, so that the total UE transmission power would not exceed $P_{CMAX}$

2) Example 2

$P_{CMAX\_L}$ (p,q) and $P_{CMAX\_H}$ (p,q) may be:

-

$$P_{CMAX\_L\,(p,q)} = MIN\,\{10*log10\,[p_{CMAX\_L,c,NR}\,(p) + p_{CMAX\_L,c,SL}(q)],\,P_{PowerClass,con\text{-}current},\,P_{EMAX,con\text{-}current}\}$$

-

$$P_{CMAX\_H\,(p,q)} = MIN\,\{10*log10\,[p_{CMAX\_H,c,NR}\,(p) + p_{CMAX\_H,c,SL}(q)],\,P_{PowerClass,con\text{-}current},\,P_{EMAX,con\text{-}current}\}$$

Here, $P_{PowerClass,con\text{-}current}$ may be the maximum UE power specified as MOP.

Here, $P_{EMAX,con\text{-}current}$ may be the value indicated by p-NR-FR1 or by p-UE-FR1 whichever is the smallest if both are present.

$P_{PowerClass,con\text{-}current}$ may be indicated by 'interbandConcurrentOperationPowerClass-r18' or the existing 'powerClass-v1530' or 'powerClass-v1610' or 'ue-PowerClassPerBandPerBC-r17'.

If a UE:

- is capable of simultaneous transmissions on the UL and on the SL in two respective carriers,
- would transmit on the UL and on the SL in the two respective carriers,
- the transmission on the UL would overlap with the transmission on the SL over a time period, and
- the total UE transmission power over the time period would exceed $P_{CMAX}$

the UE may:

- reduce the power for the UL transmission prior to the start of the UL transmission, if the SL transmission has higher priority than the UL transmission, so that the total UE transmission power would not exceed $P_{CMAX}$
- reduce the power for the SL transmission prior to the start of the SL transmission, if the UL transmission has higher priority than the SL transmission as determined, so that the total UE transmission power would not exceed $P_{CMAX}$

**4. NR+SL-U Behavior of UE configured transmitted power**

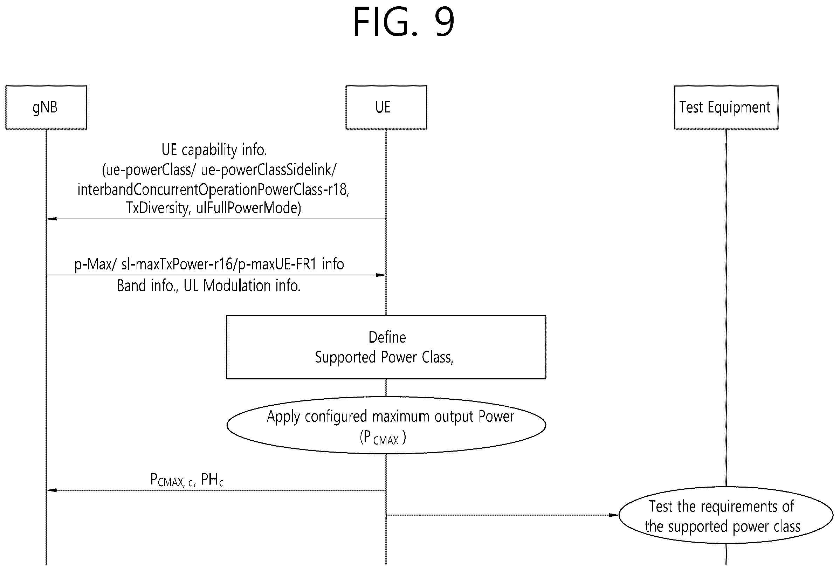

**FIG. 9 shows the NR+SL-U operation of the UE configured transmitted power according to an embodiment of the present specification.**

FIG. 9 shows Behavior of 'NR+SL-U' UE configured transmission power and the requirements to be tested. The UE may configure the transmission power using the supported power class, MPRc, A-MPRc, $\Delta T_{IB,c}$, P-MPRc, $\Delta P_{PowerClass,SL}$, and $P_{Regulatory,c}$.

PH may be Power Headroom.

The following drawings are designed to illustrate specific examples of this specification. The names of specific devices and signals/messages/fields depicted in the drawings are provided for illustrative purposes only, and therefore, the technical features of this specification are not limited to the specific names used in the drawings.

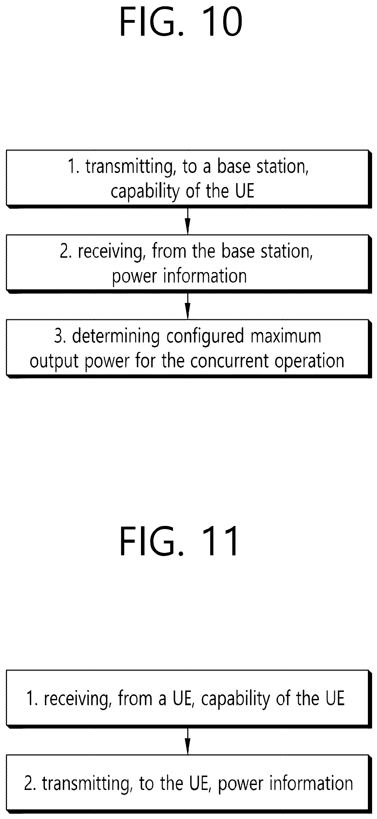

**FIG. 10 shows the procedure of the UE for the disclosure of this specification.**

1. The UE may transmit, to a base station, capability of the UE.

The UE may support concurrent operation for NR uplink and sidelink in un-licensed band.

The capability may include maximum UE power for the concurrent operation.

2. the UE may receive, from the base station, power information.

The power information may include maximum allowed UE output power for the concurrent operation.

3. the UE may determine configured maximum output power for the concurrent operation, based on the maximum UE power and the maximum allowed UE output power.

The step of determining the configured maximum output power may be performed, based on a minimum limit and a maximum limit.

The determined configured maximum output power may be equal to or greater than the minimum limit.

The determined configured maximum output power may be equal to or less than the maximum limit.

The determined configured maximum output power may be based on the maximum UE power and the maximum allowed UE output power.

The determined configured maximum output power may be based on the maximum UE power and the maximum allowed UE output power.

The minimum limit may be based on priority of the uplink and priority of the sidelink.

The capability may include capability of maximum transmission duty cycle.

The UE may determinine a power class requirement, based on the capability of maximum transmission duty cycle.

The step of determining the configured maximum output power may be performed, based on the determined the power class requirement and the capability of maximum transmission duty cycle.

The maximum UE power for the concurrent operation may be interbandConcurrentOperationPowerClass-r18.

The maximum allowed UE output power may be one of p-maxUE-FR1, p-NR-FR1, or p-UE-FR1.

The following drawings are designed to illustrate specific examples of this specification. The names of specific devices and signals/messages/fields depicted in the drawings are provided for illustrative purposes only, and therefore, the technical features of this specification are not limited to the specific names used in the drawings.

**FIG. 11 shows the procedure of the base station for the disclosure of this specification.**

1. The base station may receive, from a UE, capability of the UE.

The UE may support concurrent operation for NR uplink and sidelink in un-licensed band.

The capability may include maximum UE power for the concurrent operation.

2. The base station may transmit, to the UE, power information.

The power information may include maximum allowed UE output power for the concurrent operation.

The UE may determine configured maximum output power for the concurrent operation, based on the maximum UE power and the maximum allowed UE output power.

The capability may include capability of maximum transmission duty cycle.

The UE may determine the configured maximum output power, based on the capability of maximum transmission duty cycle.

The maximum UE power for the concurrent operation may be interbandConcurrentOperationPowerClass-r18,

The maximum allowed UE output power may be one of p-maxUE-FR1, p-NR-FR1, or p-UE-FR1.

Hereinafter, a processor for providing communication according to some embodiments of the present specification will be described.

The processor is configured to: transmitting, to a base station, capability of the UE; wherein the UE supports concurrent operation for NR uplink and sidelink in un-licensed band, wherein the capability includes maximum UE power for the concurrent operation, receiving, from the base station, power information; and wherein the power information includes maximum allowed UE output power for the concurrent operation, determining configured maximum output power for the concurrent operation, based on the maximum UE power and the maximum allowed UE output power.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause to: transmitting, to a base station, capability of the UE; wherein the UE supports concurrent operation for NR uplink and sidelink in un-licensed band, wherein the capability includes maximum UE power for the concurrent operation, receiving, from the base station, power information; and wherein the power information includes maximum allowed UE output power for the concurrent operation, determining configured maximum output power for the concurrent operation, based on the maximum UE power and the maximum allowed UE output power.

The present specification may have various effects.

For example, the commercialization and use cases of NR+SL-U terminals can be expanded.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

**Claims**

1. A method for performing communication, performed by a User Equipment (UE), comprising:

   transmitting, to a base station, capability of the UE;
   wherein the UE supports concurrent operation for NR uplink and sidelink in un-licensed band,
   wherein the capability includes maximum UE power for the concurrent operation,
   receiving, from the base station, power information; and
   wherein the power information includes maximum allowed UE output power for the concurrent operation,
   determining configured maximum output power for the concurrent operation, based on the maximum UE power and the maximum allowed UE output power.

2. The method of claim 1,

   wherein the step of determining the configured maximum output power is performed, based on a minimum limit and a maximum limit,
   wherein the determined configured maximum output power is equal to or greater than the minimum limit,
   wherein the determined configured maximum output power is equal to or less than the maximum limit,
   wherein the determined configured maximum output power is based on the maximum UE power and the maximum allowed UE output power,
   wherein the determined configured maximum output power is based on the maximum UE power and the maximum allowed UE output power.

3. The method of claim 2,
   wherein the minimum limit is based on priority of the uplink and priority of the sidelink.

4. The method of claim 1, further comprising:

   wherein the capability includes capability of maximum transmission duty cycle,
   determining a power class requirement, based on the capability of maximum transmission duty cycle,
   wherein the step of determining the configured maximum output power is performed, based on the determined the power class requirement and the capability of maximum transmission duty cycle.

5. The method of claim 1,

wherein the maximum UE power for the concurrent operation is interbandConcurrentOperationPowerClass-r18, wherein the maximum allowed UE output power is one of p-maxUE-FR1, p-NR-FR1, or p-UE-FR1.

6. A method for performing communication, performed by a base station, comprising:

   receiving, from a UE, capability of the UE;
   wherein the UE supports concurrent operation for NR uplink and sidelink in un-licensed band,
   wherein the capability includes maximum UE power for the concurrent operation,
   transmitting, to the UE, power information; and
   wherein the power information includes maximum allowed UE output power for the concurrent operation,
   wherein the UE determines configured maximum output power for the concurrent operation, based on the maximum UE power and the maximum allowed UE output power.

7. The method of claim 6,

   wherein the capability includes capability of maximum transmission duty cycle,
   wherein the UE determines the configured maximum output power, based on the capability of maximum transmission duty cycle.

8. The method of claim 6,

   wherein the maximum UE power for the concurrent operation is interbandConcurrentOperationPowerClass-r18, wherein the maximum allowed UE output power is one of p-maxUE-FR1, p-NR-FR1, or p-UE-FR1.

9. A UE performing communication, comprising:

   a transceiver; and
   a processor,
   wherein the processor performs operation comprising:

   transmitting, to a base station, capability of the UE;
   wherein the UE supports concurrent operation for NR uplink and sidelink in un-licensed band,
   wherein the capability includes maximum UE power for the concurrent operation,
   receiving, from the base station, power information; and
   wherein the power information includes maximum allowed UE output power for the concurrent operation,
   determining configured maximum output power for the concurrent operation, based on the maximum UE power and the maximum allowed UE output power.

10. The UE of claim 9,

   wherein the step of determining the configured maximum output power is performed, based on a minimum limit and a maximum limit,
   wherein the determined configured maximum output power is equal to or greater than the minimum limit,
   wherein the determined configured maximum output power is equal to or less than the maximum limit,
   wherein the determined configured maximum output power is based on the maximum UE power and the maximum allowed UE output power,
   wherein the determined configured maximum output power is based on the maximum UE power and the maximum allowed UE output power.

11. The UE of claim 10,
   wherein the minimum limit is based on priority of the uplink and priority of the sidelink.

12. The UE of claim 9, wherein the operation further comprises:

   wherein the capability includes capability of maximum transmission duty cycle,
   determining a power class requirement, based on the capability of maximum transmission duty cycle,
   wherein the step of determining the configured maximum output power is performed, based on the determined the power class requirement and the capability of maximum transmission duty cycle.

13. The UE of claim 9,

wherein the maximum UE power for the concurrent operation is interbandConcurrentOperationPowerClass-r18,
wherein the maximum allowed UE output power is one of p-maxUE-FR1, p-NR-FR1, or p-UE-FR1.

14. A base station performing communication, comprising:

a transceiver; and
a processor,
wherein the processor performs operation comprising:

receiving, from a UE, capability of the UE;
wherein the UE supports concurrent operation for NR uplink and sidelink in un-licensed band,
wherein the capability includes maximum UE power for the concurrent operation,
transmitting, to the UE, power information; and
wherein the power information includes maximum allowed UE output power for the concurrent operation,
wherein the UE determines configured maximum output power for the concurrent operation, based on the
maximum UE power and the maximum allowed UE output power.

15. An apparatus in mobile communication, comprising:

at least one processor; and
at least one memory storing instructions and operably electrically connectable with the at least one processor,
wherein, based on the instructions being operated by the at least one processor, the instructions perform
operation comprising:

transmitting, to a base station, capability of the apparatus;
wherein the apparatus supports concurrent operation for NR uplink and sidelink in un-licensed band,
wherein the capability includes maximum UE power for the concurrent operation,
receiving, from the base station, power information; and
wherein the power information includes maximum allowed UE output power for the concurrent operation,
determining configured maximum output power for the concurrent operation, based on the maximum UE
power and the maximum allowed UE output power.

16. At least one computer readable medium (CRM) storing instructions that, based on being executed by at least one
processor, perform operations comprising:

transmitting, to a base station, capability of a UE including the at least one CRM;
wherein the UE supports concurrent operation for NR uplink and sidelink in un-licensed band,
wherein the capability includes maximum UE power for the concurrent operation,
receiving, from the base station, power information; and
wherein the power information includes maximum allowed UE output power for the concurrent operation,
determining configured maximum output power for the concurrent operation, based on the maximum UE power
and the maximum allowed UE output power.

# FIG. 1

<u>1</u>

# FIG. 2

EP 4 694 386 A1

# FIG. 3

# FIG. 4

# FIG. 5

| Radio | Microwave | | Infrared | Visible | Ultraviolet | X-Ray | Gamma-Ray |

mmWave | Terahertz

Wavelength $10^8$ m  1m     10mm    1mm   0.1mm    700nm  390nm      10nm        0.01nm

Radiation Type

Frequency  3 Hz  300 MHz   30 GHz  300 GHz   3 THz   430 THz  730 THz    30 PHz       30 EHz

Mega : $10^6$    Giga : $10^9$    Tera : $10^{12}$    Peta : $10^{15}$    Exa : $10^{18}$

# FIG. 6

# FIG. 7

```
···  ┌──────────────────────────────────────────┐  ···
     │              One Frame (10ms)              │
     └──────────────────────────────────────────┘

···  ┌──────────────────────┐  ┌──────────────────────┐  ···
     │   Half-Frame (5ms)    │  │   Half-Frame (5ms)    │
     └──────────────────────┘  └──────────────────────┘

···  ┌──────────┐ ··· ┌──────────┐  ┌──────────┐ ··· ┌──────────┐  ···
     │Subframe 0│     │Subframe 4│  │Subframe 5│     │Subframe 9│
     │  (1ms)   │     │  (1ms)   │  │  (1ms)   │     │  (1ms)   │
     └──────────┘     └──────────┘  └──────────┘     └──────────┘
```

Subframe (1ms)

| | Slot 0 (14symbols) |
|---|---|
| 15KHz | |

1ms

| | Slot 0 (14symbols) | Slot 1 |
|---|---|---|
| 30KHz | | |

500us

| | Slot 0 (14symbols) | Slot 1 | Slot 2 | Slot 3 |
|---|---|---|---|---|
| 60KHz | | | | |

250us

| | Slot 0 (14symbols) | Slot 1 | Slot 2 | Slot 3 | Slot 4 | Slot 5 | Slot 6 | Slot 7 |
|---|---|---|---|---|---|---|---|---|
| 120KHz | | | | | | | | |

125us

# FIG. 8

□ DL OR UL

FREQUENCY

RB INDEX

SYMBOL INDEX

One TTI

▨ : DL CONTROL CHANNEL    ▨ : UL CONTROL CHANNEL

EP 4 694 386 A1

# FIG. 9

gNB | UE | Test Equipment

UE capability info.
(ue-powerClass/ ue-powerClassSidelink/
interbandConcurrentOperationPowerClass-r18,
TxDiversity, ulFullPowerMode)

p-Max/ sl-maxTxPower-r16/p-maxUE-FR1 info
Band info., UL Modulation info.

Define
Supported Power Class,

Apply configured maximum output Power
($P_{CMAX}$)

$P_{CMAX, c}$, $PH_c$

Test the requirements of
the supported power class

EP 4 694 386 A1

# FIG. 10

| 1. transmitting, to a base station, capability of the UE |
| 2. receiving, from the base station, power information |
| 3. determining configured maximum output power for the concurrent operation |

# FIG. 11

| 1. receiving, from a UE, capability of the UE |
| 2. transmitting, to the UE, power information |

## INTERNATIONAL SEARCH REPORT

| International application No. |
|---|
| **PCT/KR2024/003147** |

### A. CLASSIFICATION OF SUBJECT MATTER

**H04W 52/14**(2009.01)i; **H04W 52/36**(2009.01)i; **H04W 8/24**(2009.01)i; **H04W 76/16**(2018.01)i; **H04W 88/02**(2009.01)i

According to International Patent Classification (IPC) or to both national classification and IPC

### B. FIELDS SEARCHED

Minimum documentation searched (classification system followed by classification symbols)

H04W 52/14(2009.01); H04W 52/08(2009.01); H04W 52/24(2009.01); H04W 52/32(2009.01); H04W 52/36(2009.01); H04W 92/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 능력(capability), NR 업링크(New Radio uplink), 사이드링크(sidelink), 동시(concurrent), 최대 UE 전력(maximum UE power), 최대 허용 UE 출력 전력(Maximum allowed UE output power)

### C. DOCUMENTS CONSIDERED TO BE RELEVANT

| Category* | Citation of document, with indication, where appropriate, of the relevant passages | Relevant to claim No. |
|---|---|---|
| Y | KR 10-2011-0131275 A (INTERDIGITAL TECHNOLOGY CORPORATION) 06 December 2011 (2011-12-06)<br>See paragraph [0061]; claims 1 and 6-9; and figure 6. | 1-16 |
| Y | KR 10-2021-0074874 A (SAMSUNG ELECTRONICS CO., LTD.) 22 June 2021 (2021-06-22)<br>See paragraphs [0108], [0117]-[0118] and [0203]. | 1-16 |
| Y | QUALCOMM INCORPORATED. P-MPR and maxULDutycycle limit parameters. R4-1900440, 3GPP TSG-RAN WG4 Meeting #90. Athens, Greece. 15 February 2019.<br>See section 2.1. | 4,7,12 |
| Y | 3GPP; TSG RAN; NR; User Equipment (UE) radio transmission and reception; Part 3: Range 1 and Range 2 Interworking operation with other radios (Release 18). 3GPP TS 38.101-3 V18.0.0. 12 January 2023.<br>See section 6.2B.1.3. | 5,8,13 |
| A | JP 2022-508021 A (NEC CORP.) 19 January 2022 (2022-01-19)<br>See paragraph [0053]; and figure 2. | 1-16 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **14 June 2024** | **17 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 694 386 A1

| INTERNATIONAL SEARCH REPORT | | International application No. |
|---|---|---|
| Information on patent family members | | PCT/KR2024/003147 |

| Patent document cited in search report | | | Publication date (day/month/year) | Patent family member(s) | | | Publication date (day/month/year) |
|---|---|---|---|---|---|---|---|
| KR 10-2011-0131275 | A | | 06 December 2011 | AU | 2006-235124 | A1 | 19 October 2006 |
| | | | | AU | 2010-200424 | A1 | 25 February 2010 |
| | | | | AU | 235124 | B2 | 05 November 2009 |
| | | | | BR | 15490 | A2 | 17 May 2011 |
| | | | | BR | PI0615490 | A2 | 17 May 2011 |
| | | | | CA | 2604154 | A1 | 19 October 2006 |
| | | | | CN | 101390029 | A | 18 March 2009 |
| | | | | CN | 104796977 | A | 22 July 2015 |
| | | | | CN | 104796977 | B | 28 February 2020 |
| | | | | CN | 104812048 | A | 29 July 2015 |
| | | | | CN | 104812048 | B | 27 September 2019 |
| | | | | EP | 1875351 | A2 | 09 January 2008 |
| | | | | EP | 1875351 | A4 | 14 March 2012 |
| | | | | EP | 1875351 | B1 | 25 March 2015 |
| | | | | EP | 2986065 | A1 | 17 February 2016 |
| | | | | HK | 1220571 | A1 | 05 May 2017 |
| | | | | JP | 2008-538465 | A | 23 October 2008 |
| | | | | JP | 4642109 | B2 | 02 March 2011 |
| | | | | KR | 10-1061088 | B1 | 01 September 2011 |
| | | | | KR | 10-1257971 | B1 | 24 April 2013 |
| | | | | KR | 10-1389906 | B1 | 29 April 2014 |
| | | | | KR | 10-1497518 | B1 | 03 March 2015 |
| | | | | KR | 10-1538561 | B1 | 22 July 2015 |
| | | | | KR | 10-2008-0005534 | A | 14 January 2008 |
| | | | | KR | 10-2008-0018254 | A | 27 February 2008 |
| | | | | KR | 10-2013-0069845 | A | 26 June 2013 |
| | | | | KR | 10-2013-0122015 | A | 06 November 2013 |
| | | | | KR | 10-2014-0066775 | A | 02 June 2014 |
| | | | | KR | 10-2014-0129395 | A | 06 November 2014 |
| | | | | MX | 2007012467 | A | 08 November 2007 |
| | | | | SG | 161254 | A1 | 27 May 2010 |
| | | | | US | 10624098 | B2 | 14 April 2020 |
| | | | | US | 11044728 | B2 | 22 June 2021 |
| | | | | US | 11765710 | B2 | 19 September 2023 |
| | | | | US | 2006-0253736 | A1 | 09 November 2006 |
| | | | | US | 2015-0065190 | A1 | 05 March 2015 |
| | | | | US | 2016-0198476 | A1 | 07 July 2016 |
| | | | | US | 2018-0007695 | A1 | 04 January 2018 |
| | | | | US | 2018-0270830 | A1 | 20 September 2018 |
| | | | | US | 2020-0214013 | A1 | 02 July 2020 |
| | | | | US | 2021-0314949 | A1 | 07 October 2021 |
| | | | | US | 2024-0008022 | A1 | 04 January 2024 |
| | | | | US | 8909945 | B2 | 09 December 2014 |
| | | | | US | 9301261 | B2 | 29 March 2016 |
| | | | | US | 9693354 | B2 | 27 June 2017 |
| | | | | WO | 2006-110492 | A2 | 19 October 2006 |
| | | | | WO | 2006-110492 | A3 | 23 October 2008 |
| KR 10-2021-0074874 | A | | 22 June 2021 | CN | 114830748 | A | 29 July 2022 |
| | | | | EP | 4074109 | A1 | 19 October 2022 |
| | | | | EP | 4074109 | A4 | 14 June 2023 |

Form PCT/ISA/210 (patent family annex) (July 2022)

### INTERNATIONAL SEARCH REPORT
#### Information on patent family members

| International application No. |
| --- |
| **PCT/KR2024/003147** |

| Patent document cited in search report | | | Publication date (day/month/year) | Patent family member(s) | | | Publication date (day/month/year) |
| --- | --- | --- | --- | --- | --- | --- | --- |
| | | | | US | 2021-0185685 | A1 | 17 June 2021 |
| | | | | WO | 2021-118092 | A1 | 17 June 2021 |
| JP | 2022-508021 | A | 19 January 2022 | CN | 113056939 | A | 29 June 2021 |
| | | | | EP | 3854150 | A1 | 28 July 2021 |
| | | | | EP | 3854150 | A4 | 13 October 2021 |
| | | | | US | 11818669 | B2 | 14 November 2023 |
| | | | | US | 2022-0030523 | A1 | 27 January 2022 |
| | | | | WO | 2020-056638 | A1 | 26 March 2020 |

Form PCT/ISA/210 (patent family annex) (July 2022)